# EUROPEAN PATENT APPLICATION

(11) **EP 4 159 023 A1**
(43) Date of publication of application: **05.04.2023**
(21) Application number: 22198260.6
(22) Date of filing: 28.09.2022
(51) Int. Cl.: A01D 43/10, A01D 34/00

(54) **MOWER-CONDITIONER MACHINE WITH SENSING OF CROP YIELD**

(30) Priority: 29.09.2021 US 202117488521
(71) Applicant: CNH Industrial Belgium NV, 8210 Zedelgem (BE)
(72) Inventor: FAY, Jeffrey B., Oxford, 19363 (US); SMITH, Kevin M., Narvon, 17555 (US)
(74) Representative: CNH Industrial IP Department

(57) **Abstract**

The present invention relates to a control system (670, 970) configured to be operatively coupled with an agricultural assembly (600, 900) comprising an agricultural work vehicle (610, 910) and a mower-conditioner machine (620, 920) coupled with the agricultural work vehicle (610, 910), the mower-conditioner (620, 920) including a crop-engaging device (634, 934) configured for engaging with the forage crop material. The control system (670, 970) includes: a yield sensor (649, 949) configured for detecting an operative parameter associated with the crop-engaging device (634, 934) when the forage crop material engages the crop-engaging device (634, 934) and configured for outputting an operative parameter signal associated with the operative parameter, and a controller (612, 640, 912, 940) operatively coupled with the yield sensor (649, 949) and configured to determine a crop material yield based at least partly on the operative parameter signal received from the yield sensor.

## Description

### FIELD OF THE INVENTION

The present invention pertains to an agricultural harvesting machines, and, more specifically, to a mower-conditioner machine.

### BACKGROUND OF THE INVENTION

Generally speaking, forage (which can also be referred to herein as crop, crop material, forage crop, forage material, or forage crop material) is plant matter that can be harvested and provided to livestock or other animals as fodder, including but not limited to cattle, sheep, goats, and horses, during, for example, the winter or at other times when pasture land has inadequate amounts of vegetation for livestock of other animals. Depending upon the processing of the forage, forage can be formed into hay or silage. Both hay and silage can be made from grass and legumes (or mixtures thereof), and silage can also be made from, for example, corn or wheat. One difference between hay and silage is that hay has a much lower moisture content than silage; for example, hay can have a moisture content of 12%, whereas silage can be chopped or baled at a moisture content of 40-60%, hay thus being much drier. Hay (whether grass hay, legume hay, or a mixture thereof) results from a process that includes planting (though the plant matter is often perennial), growing, cutting, drying, and storing. Depending upon location, grass hay can include, for example, orchard grass, timothy, fescue, brome, Bermuda grass, Kentucky bluegrass, and/or ryegrass, whereas legume hay can include, for example, alfalfa, clover, and/or birdsfoot trefoil. Silage (which can, at least in some circumstances, also be referred to as haylage) can involve causing the crop material to ferment.

The harvesting of forage seeks to maximize both the quantity (that is, the yield) and the quality of the hay or silage, the quantity also be referred to as the yield, the quality being the feed value of the hay or silage, such as the level of dry matter, the level of crude protein, and/or the energy provided, for example, in terms of total digestible nutrients (TDN) or the net energy of maintenance (NEM). These factors require balancing relative to one another. Further, depending upon the desired end product with respect to the forage (i.e., hay or silage), a variety of forage processing operations can be involved, and these forage processing operations include haymaking operations and silage-making operations. Haymaking operations, for example, can include cutting (which can be referred to as mowing), conditioning, tedding, raking, merging, chopping, baling, bale retrieval, transport, and/or storage, and silage-making operations can include not only cutting but also chopping, baling, and/or ensiling (or at least some sort of covering). Depending upon location, forage crop can be harvested two, three, four, five, six, or possibly seven times during a single season, each cycle of harvesting during a single season being time dependent, as well as any of the various forage processing operations of each cycle. As is known, timing of any of the forage processing operations can be critical. Not only is timing critical for making high value hay or silage, but so is the processing of the crop material during forage processing operations. A variety of agricultural harvesting machines can be used to perform these operations in aid of maximizing the quantity and quality of hay or silage.

One such agricultural harvesting machine is a mower-conditioner machine. Such mower-conditioner machines can be a header attachment to a self-propelled windrower or formed as a pull-type mower-conditioner coupled with, for instance, a tractor. Farmers may operate such mowing devices to cut any sort of crop material (hay crop, wheat, etc.) from a field and subsequently deposit the cut crop into windrows on the field. The windrows may be left on the field to dry out the crop in the sun. Thereafter, farmers may bale the cut crop material with a baler, such as a large square baler or round baler, which straddles the windrows and travels along the windrows to pick up the crop material and form it into bales. More specifically with reference to mowing-conditioning operations, leafy material of alfalfa, for instance, is nutritious and farmers (which can also be referred to interchangeably herein as growers) often seek to preserve this leafy material for the livestock during forage processing operations. The mower-conditioner machine can be used to cut standing crop material and to immediately thereafter condition, for example, a legume plant such as alfalfa by breaking, splitting, bending, crushing, cracking, and/or crimping a stem of the alfalfa plant every three to four inches so as to facilitate the dry down process while preserving the leaves of the alfalfa plant through the conditioner, or a grass plant by removing the wax of the grass at least partially.

A typical pull-type mower-conditioner includes a frame, a hitch coupled to the towing vehicle, a cutter bar, a conditioner (which can be referred to as a conditioner assembly), and a swath gate. The mower-conditioner may further include other elements such as a reel to assist crop feeding and an auger or belts to convey crop to a central discharge point. The cutter bar may include of a series of rotary discs, or a sicklebar. The conditioner assembly may include two or more conditioning rolls for conditioning the crop material. The conditioning rolls are located adjacent to one another such that a gap forms therebetween. This gap in between the paired conditioning rolls helps to define the size of the crop mat which passes therethrough. After being conditioned, the stream of crop material engages with the swath gate and is deposited onto the field. Alternatively, rather than having a pair of conditioning rolls, the conditioner can include a single roll that includes flails to remove the waxy substance from grass, as is known.

In an effort to maximize the quantity of crop material harvested (that is, the yield), it is known to generate a yield map using a chopper (which can be in the form of a forage harvester, for example) and/or a baler. However, such machines tend to process a much wider area than a mower-conditioner, due to intervening (stated otherwise, secondary) harvesting operations or processes of merging and/or raking, which combine two or more windrows to improve field efficiency, but to the detriment of resolution of field yield monitoring.

What is needed in the art is a way to improve the resolution of field yield monitoring.

### SUMMARY OF THE INVENTION

The present invention provides an agricultural assembly with a mower-conditioner machine including a yield sensor for determining a crop material yield.

The invention in one form is directed to a control system of an agricultural assembly for controllably harvesting a forage crop material, the agricultural assembly including an agricultural work vehicle and a mower-conditioner machine coupled with the agricultural work vehicle, the control system including: a control system operatively coupled with the agricultural work vehicle and the mower-conditioner machine, the control system including: a yield sensor configured for detecting an operative parameter associated with a crop-engaging device of the mower-conditioner machine when the forage crop material engages the crop-engaging device and thereby for outputting an operative parameter signal associated with the operative parameter; a controller operatively coupled with the yield sensor and configured for receiving the operative parameter signal and for determining a forage crop material yield based at least in part on the operative parameter signal.

The invention in another form is directed to an agricultural assembly for controllably harvesting a forage crop material, the agricultural assembly including: an agricultural work vehicle; a mower-conditioner machine coupled with the agricultural work vehicle, the mower-conditioner machine including a crop-engaging device configured for engaging with the forage crop material; a control system operatively coupled with the agricultural work vehicle and the mower-conditioner machine, the control system including: a yield sensor configured for detecting an operative parameter associated with the crop-engaging device when the forage crop material engages the crop-engaging device and thereby for outputting an operative parameter signal associated with the operative parameter; a controller operatively coupled with the yield sensor and configured for receiving the operative parameter signal and for determining a forage crop material yield based at least in part on the operative parameter signal.

The invention in yet another form is directed to a method of controllably harvesting a forage crop material, the method including the steps of: providing an agricultural assembly including an agricultural work vehicle, a mower-conditioner machine, and a control system, the mower-conditioner machine being coupled with the agricultural work vehicle and including a crop-engaging device configured for engaging with the forage crop material, the control system being operatively coupled with the agricultural work vehicle and the mower-conditioner machine; detecting, by a yield sensor of the control system, an operative parameter associated with the crop-engaging device when the forage crop material engages the crop-engaging device and thereby outputting an operative parameter signal associated with the operative parameter; receiving, by a controller of the control system and which is operatively coupled with the yield sensor, the operative parameter signal; and determining, by the controller, a forage crop material yield based at least in part on the operative parameter signal.

An advantage of the present invention is that it provides a way to more accurately monitor crop yield during forage processing operations.

Another advantage is that it provides a way to make improved agronomic decisions, with respect to, for example, fertilizing rate, using different types or varieties of crop on a particular field or zone or section of a field, when to perform the next forage processing operation, and/or adjusting a rate of travel across a field during a forage processing operation.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates a side view of an exemplary embodiment of an agricultural assembly, the assembly including a work vehicle and a pull-type mower-conditioner machine, in accordance with the present invention;
FIG. 2 illustrates a perspective view of a swath gate of the mower-conditioner machine of FIG. 1, the swath gate having a moisture sensor attached thereto;
FIG. 3 illustrates a side view of another exemplary embodiment of an agricultural assembly, the assembly including a work vehicle and a pull-type mower-conditioner machine with one or more moisture sensors located at the crop conditioner, in accordance with the present invention;
FIG. 4 illustrates a side view of another exemplary embodiment of an agricultural assembly, the assembly including a work vehicle and a mower-conditioner machine in the form of an attachment head (which can also be referred to as a header), in accordance with the present invention;
FIG. 5 illustrates a flowchart of a method for conducting an agricultural procedure in a field;
FIG. 6 illustrates a side view of another exemplary embodiment of an agricultural assembly, the assembly including a work vehicle and a pull-type mower-conditioner machine, in accordance with the present invention;
FIG. 7 illustrates a perspective view of a swath gate of the mower-conditioner machine of FIG. 6, with portions broken away, the swath gate having a force/load sensor attached thereto;
FIG. 8 illustrates a schematic, side view of the swath gate and conditioner rolls of the mower-conditioner machine of FIG. 6, with portions broken away;
FIG. 9 illustrates a side view of another exemplary embodiment of an agricultural assembly, the assembly including a work vehicle and a mower-conditioner machine in the form of an attachment head, in accordance with the present invention;
FIG. 10 illustrates a flow diagram showing a method of controllably harvesting a forage crop material, in accordance with an exemplary embodiment of the present invention.

### DETAILED DESCRIPTION OF THE INVENTION

The terms "forward", "rearward", "left" and "right", when used in connection with the agricultural assembly and/or components thereof are usually determined with reference to the direction of forward operative travel, but they should not be construed as limiting. The terms "longitudinal" and "transverse" are determined with reference to the fore-and-aft direction of the work vehicle and are equally not to be construed as limiting. The terms "downstream" and "upstream" are determined with reference to the intended direction of crop material flow during operation, with "downstream" being analogous to "rearward" and "upstream" being analogous to "forward." As used herein, the term mower-conditioner machine may include a pull-type mower-conditioner or a self-propelled mower-conditioner, including a rotary disc attachment head for a work vehicle. Further, though hay is sometimes referenced herein as the type of forage crop material, this is provided only by way of example and not limitation. Further, as indicated above, forage processing operations include haymaking operations and silage-making operations.

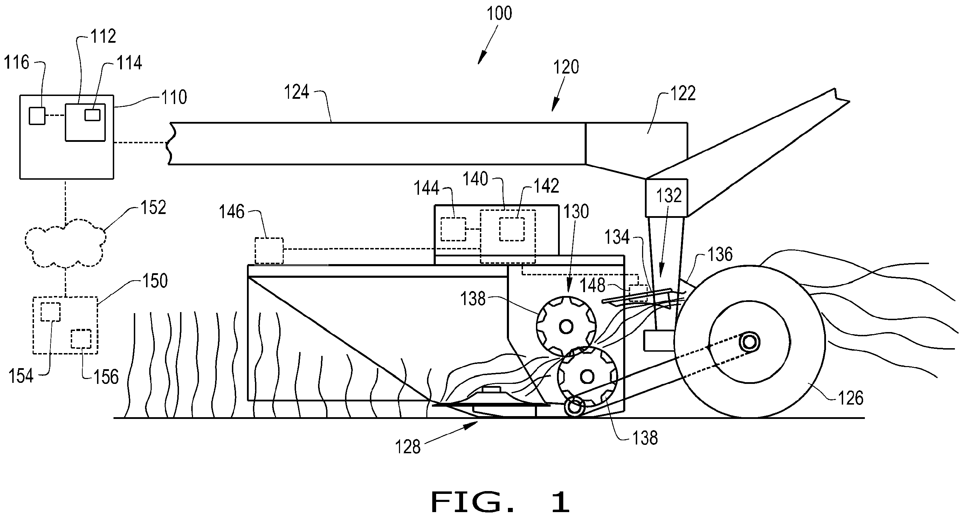

Referring now to the drawings, and more particularly to FIGS. 1-2, there is shown an exemplary embodiment of an agricultural assembly 100 which includes a work vehicle 110 (which can be referred to as an agricultural work vehicle) and a pull-type mower-conditioner machine 120. The work vehicle 110 may pull the mower-conditioner machine 120 in a forward direction of travel for mowing and conditioning the crop material in the field.

The work vehicle 110, which is shown schematically, may be in the form of any desired vehicle, such as a tractor or self-propelled windrower. The work vehicle 110 may include a chassis, wheels and/or tracks, a prime mover, a steering assembly, and a cab for housing an operator. The work vehicle 110 may also include a controller 112, with a memory 114, and one or more sensor(s) 116 for sensing various operating parameters of the work vehicle 110. For example, the work vehicle 110 may include a positioning or location sensor 116 for sensing and providing location data. The location sensor 116 may be in the form of a global positioning system (GPS) sensor or the like which tracks the position of the work vehicle 110 in the field. The work vehicle 110 may also include a speed sensor, inclinometer, etc.

The mower-conditioner machine 120 may be connected to and towed by the work vehicle 110. The mower-conditioner machine 120 may generally include a frame 122 with a tongue 124 connected to the vehicle 110, wheels 126, a transversely disposed cutter bar 128, a crop conditioner 130, and a discharge assembly 132. The discharge assembly 132 includes a swath gate 134 pivotally connected to the frame 122 and a pair of side shields 136 (which can be referred to as windrow shields) pivotally connected to the frame 122.

The mower-conditioner machine 120 may also include a controller 140, with a memory 142, and one or more sensor(s) 144, 146, 148 for sensing various operating parameters of the mower-conditioner machine 120 and/or characteristics of the crop material. For instance, the mower-conditioner machine 120 may include one or more location sensors 144, crop characteristic sensors 146, and moisture sensors 148. It should be appreciated that the mower-conditioner machine 120 may not include a separate controller 140; therein, the various sensors sensor(s) 144, 146, 148 may be operably coupled to the vehicle controller 112 which may control the functionality of the mower-conditioner machine 120.

As the mower-conditioner 120 is towed through the field, the standing crop is cut by the cutter bar 128 and transported downstream to the crop conditioner 130. The cutter bar 128 may be located at the front of the frame 122. The cutter bar 128 may be in the form of any desired cutter bar 128, such as a rotary disc cutter bar with multiple cutting disc heads. The crop conditioner 130 may condition or otherwise crush, crack, or crimp the crop material to decrease the drying time of the crop material on the field. The crop conditioner 130 generally includes at least two conditioning rolls 138 (an upper roll and a lower roll) rotatably connected to the frame 122 and spaced apart from one another by a gap which allows the crop material to pass therethrough. The severed and conditioned crop material is then ejected rearwardly toward the discharge assembly 132.

The swath gate 134 generally influences the height or upper bound of the stream of crop material. The swath gate 134 may be automatically and/or manually adjusted relative to the frame. The side shields 136, which may also be adjustable relative to the frame 122, generally influence the width of the stream of crop material. If the mower-conditioner machine 120 is configured to create swaths, the ejected stream of crop material may contact and be directed by the swath gate 134. If the mower-conditioner machine 120 is configured to create windrows, the ejected stream of crop material may contact and be directed by the swath gate 134 and the shields 136. Relative to other harvesting procedures, mowing procedures may work the field in smaller sections or widths in a given pass through the field. Mower crop cutting widths are generally on the order of 3 to 4.5 meters, or 10 to 15 feet.

The controller 140 can be operably connected to the vehicle controller 112 via an ISOBUS communication interface. The controller 140 can be configured to receive location data from one or more location sensors 116 and/or 144, receive moisture content data from one or more moisture sensors 148, and receive crop information from user inputted data and/or from one or more crop characteristic sensors 146 which may sense crop characteristics, including the type of crop in the field and the maturity level of the crop; sensors 146 can sense information concerning the quality of the crop, such quality being associated with the feed quality and/or nutritional quality. The controller 140 can also be configured to generate a moisture content map 154 based at least partially on the sensed moisture content data and the location data. The controller 140 can also be configured to estimate a drying time 156 of the crop material based at least partially on the moisture content map 154. However, if the mower-conditioner machine 120 is not equipped with the controller 140, the vehicle controller 112 may perform the aforementioned functionality.

The vehicle controller 112 and/or the controller 140 can also be operatively coupled to a data center 150 by way of a network 152 of the assembly 100. For instance, the controller 140 can be operably connected to the network 152 by way of the vehicle controller 112 or the controller 140 may be directly connected to the network 152, separately from the vehicle controller 112. The data center 150 may also be configured to receive, process, and record data concerning with the system 100. The data center 150 may be in the form of any desired remote or offsite data center which may receive, process, and/or store any data concerning the operation of the assembly 100, the crop material, the field itself, and/or various other conditions, such as the real-time weather conditions. The network 152 may be any suitable network, including a wireless network having one or more processors or nodes. Additionally, the network 152 may broadly represent any combination of one or more data communication networks including local area networks, wide area networks, neural networks, etc., using a wired or wireless connection.

It should be appreciated that the vehicle controller 112, the controller 140, and/or the data center 150 may solely or collectively generate the moisture content map 154 and/or conduct drying time 156 processing for processing the signals, e.g. location data, moisture content data, etc., from the sensors 116, 144, 146, 148 and estimating a drying time for one or more sections or zones of the field. The moisture content map 154 may be generated for the entire field or portions thereof such that the map may be created and updated in real-time as the mower-conditioner machine 120 is operating in the field. In more detail, the controller 140, vehicle controller 112, and/or the data center 150 may determine the moisture content of the crop material via a lookup table upon receiving the moisture data from the sensor(s) 148, overlay the determined moisture content with location data, and subsequently create the moisture content map 154. The moisture content map 154 and/or any other desired information, such as the crop type and/or weather conditions, may be used to estimate a drying time 156 of the crop material. The estimated drying time 156 may be sectionalized by specific passes and/or zones of similarly grouped crop material, such as dry or moist groupings of crop material. Furthermore, the controller(s) 140, 112, and/or data center 150 may generate an optimized procedure based on the estimated drying time. For instance, one or more specific areas of the field may require more or less dry-down time, which can then be used to more precisely plan an optimum baling or chopping strategy in a particular field to provide optimum dry-down time for each section of a field. For example, if the crop material mowed in the northwest quadrant of a field has much higher moisture content at the time of mowing than the other three quadrants, then the operator can bale or chop the northwest quadrant last, thus allowing it more dry-down time than the other sections of the field rather than entering the field and beginning operation wherever it is most convenient to start operation. As can be appreciated, the data center may or may not store the moisture content map 154 and/or the estimated drying time 156.

The location sensor 144 may be connected to the frame 122. The location sensor 144 may be in the form of any desired sensor for sensing the location of the mower-conditioner machine 120 (such as a GPS). The crop characteristic sensor 146 can be connected to the frame 122 at any desired location. The crop characteristic sensor 146 may be in the form of any desired sensor for sensing one or more characteristics of the crop, such as an optical sensor, e.g. camera, or a wave-ranging sensor, e.g. LIDAR sensor, or a near infra-red (NIR) sensor. The crop characteristic sensor 146 may sense the type of crop material being harvested. It is noted that the mower-conditioner machine 120 may not include a location sensor 144 or a crop characteristic sensor 146.

Each moisture sensor 148 may be connected to a respective crop-engaging member. As shown in FIGS. 1-2, the moisture sensor(s) 148 is connected to the crop-engaging surface, i.e., underside, of the swath gate 134. Each moisture sensor 148 may be embedded within the swath gate 134 so that each sensor 148 is flush with the crop-engaging surface of the swath gate 134. Each moisture sensor 148 may be in the form of one or more electrodes for sensing a voltage drop between the electrodes or between one electrode and the ground, e.g. a component of the swath gate 134 and/or frame 122 which is grounded, and/or a wave-ranging sensor, e.g. a LIDAR sensor or infrared sensor. It should be appreciated that one or more moisture sensors 148 may also be connected to one or both of the side shields 136. For instance, a moisture sensor 148 may be connected to the inner, crop-engaging surface of one of the shields 136. However, only the swath gate 134 may have moisture sensors 148 connected thereto.

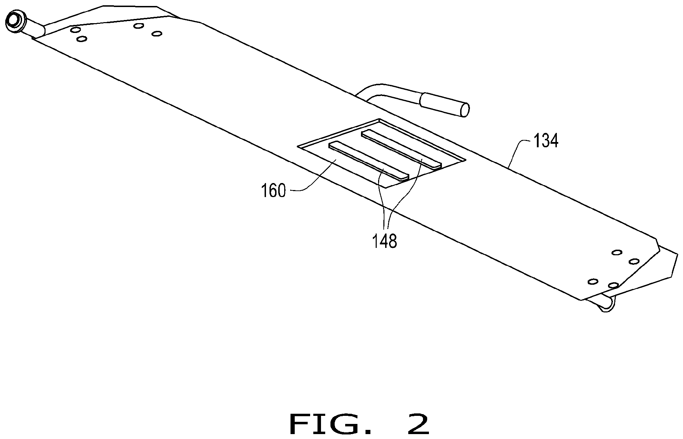

Additionally, the one or more moisture sensors 148 may be fitted within a mount 160, such as an electrically insulated mount 160, that connects the moisture sensor(s) 148 to the swath gate 134 (FIG. 2). In more detail, the swath gate 134 may have a through-hole or recessed portion in which the mount is seated. The mount 160 may include a plastic material.

In the embodiment wherein the one or more moisture sensors 148 include the electrode(s), a current may pass between the electrodes and/or ground and through the crop material as the stream of crop material passes over the electrode(s) in the swath gate 134. Hence, the voltage difference or drop which results from the current flow through the crop material will ultimately determine the moisture content of the crop material. Upon receiving the moisture data from the moisture sensor(s) 148, the controller 140, the vehicle controller 112, and/or data center 150 may determine the moisture content of the crop material by employing a lookup table or algorithm that correlates the moisture data to a particular moisture content of the crop material.

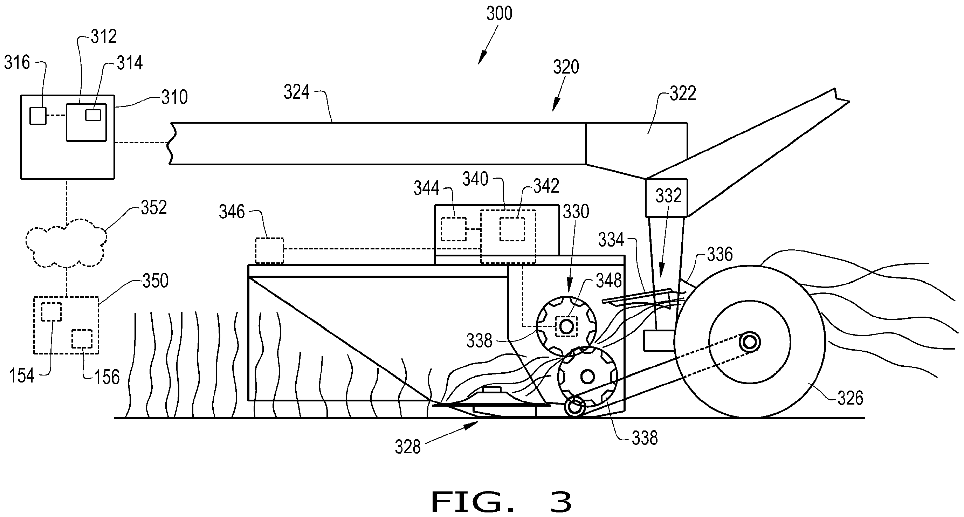

Referring now to FIG. 3, there is shown another embodiment of an agricultural assembly 300, which may be substantially similar to the agricultural assembly 100 except that the moisture sensor(s) 348 is(are) located on one or both of the crop conditioning rolls 338 instead of or in addition to the swath gate 334. For instance, one moisture sensor 348 may be coupled to one conditioning roll 338. In one embodiment, a current may be provided to the conditioning roll 338 and the other conditioning roll 338 may be grounded such that a voltage drop measured between the conditioning rolls 338 may be used to determine the moisture content of the crop material. It should be appreciated that the swath gate 334 may not include any moisture sensors 348. It should also be appreciated that the mower-conditioner machine 320 may include two or more moistures sensors 348 located on swath gate 334 and the conditioning rolls 338. The controller 340 may function similarly to the controller 140, as discussed above, to generate the moisture content map 154. Like elements have been identified with like reference characters, except for the 300 series designation.

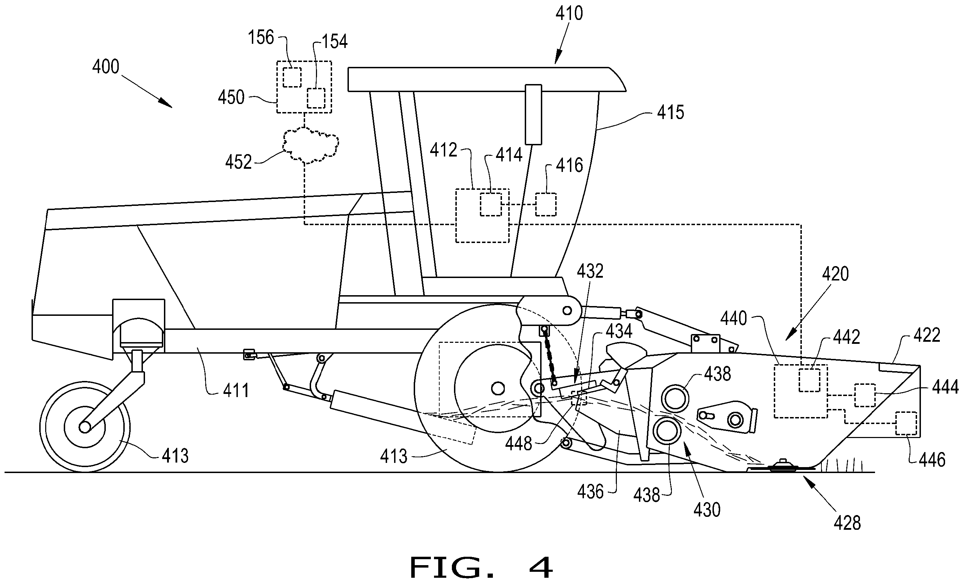

Referring now to FIG. 4, there is shown another embodiment of an agricultural assembly 400 which includes a work vehicle 410 (which can be referred to as an agricultural work vehicle) and a mower-conditioner machine 420. As shown, the work vehicle 410 is a self-propelled windrower 410 and the mower-conditioner machine 420 is an attachment head 420 that is removably connected to the windrower 410.

Similarly to the work vehicle 110, the work vehicle 410 may include a chassis 411, wheels and/or tracks 413, a prime mover, a steering assembly, a cab 415, a controller 412, with a memory 414, and one or more sensor(s) 416, such as a location sensor 416, for sensing various operating parameters of the work vehicle 410. The vehicle controller 412 may operate substantially similar to the vehicle controller 112, as discussed above.

The mower-conditioner machine 420 may be removably connected to and pushed by the work vehicle 410. The mower-conditioner 420 may include a frame 422 that is removably connected to the chassis 411 of the work vehicle 410, a transversely disposed cutter bar 428, a crop conditioner 430 with conditioning rolls 438, and a discharge assembly 432. The discharge assembly 432 includes a swath gate 434 which may be pivotally connected to the frame 422 and a pair of side shields 436 which may be pivotally connected to the frame 422.

The mower-conditioner machine 420 may also include a controller 440, with a memory 442, and one or more sensor(s) 446, 448 for sensing various operating parameters of the mower-conditioner machine 420 and/or characteristics of the crop material. The controller 440 can be operably connected to the vehicle controller 412. The mower-conditioner machine 420 may include one or more crop characteristic sensors 446 and/or moisture sensors 448. The controller 440 and sensors 444, 446, 448 may be substantially similar to the controller 140 and sensors 144, 146, 148, as discussed above. It should be appreciated that the mower-conditioner machine 420 may not include a controller 440 or location sensor 444; therein, the various sensors sensor(s) 446, 448 may be operably coupled to the vehicle controller 412 which may control the functionality of the mower-conditioner machine 420. The agricultural assembly 400 may also include a data center 450 and a network 452 which may be similar to the data center 150 and network 152, as discussed above.

In general, controllers 112, 312, 412, 140, 340, 440, and any controllers associated with data center 150, 350, 450 (referenced as DC-C, for data center controller, which can control any of the operations mentioned herein with respect to data center 150, 350, 450) may each correspond to any suitable processor-based device(s), such as a computing device or any combination of computing devices. Each controller 112, 312, 412, 140, 340, 440, DC-C may generally include one or more processor(s) and associated memory (including, but not limited to, 114, 314, 414, 142, 342, 442) configured to perform a variety of computer-implemented functions (e.g., performing the methods, steps, algorithms, calculations and the like disclosed herein). Thus, each controller 112, 312, 412, 140, 340, 440, DC-C may include a respective processor therein, as well as associated memory, data, and instructions, each forming at least part of the respective controller 112, 312, 412, 140, 340, 440, DC-C. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the respective memory may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD), and/or other suitable memory elements. Such memory may generally be configured to store information accessible to the processor(s), including data that can be retrieved, manipulated, created, and/or stored by the processor(s) and the instructions that can be executed by the processor(s). In some embodiments, data may be stored in one or more databases.

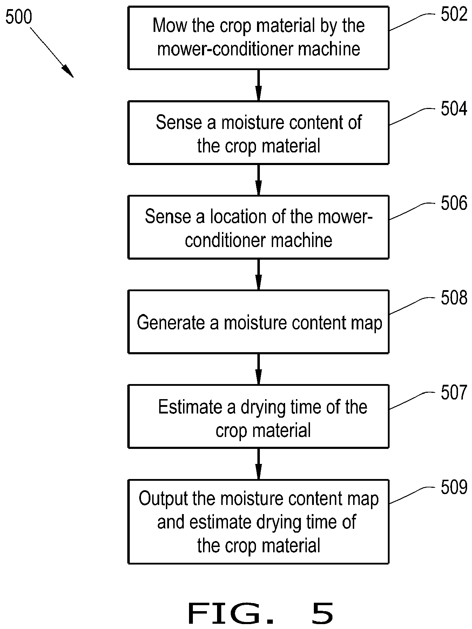

Referring now to FIG. 5, there is shown a flowchart of a method 500 for conducting an agricultural procedure. By way of example only, the method 500 is described herein with reference to the agricultural assembly 100. However, the agricultural assembly 100, 300, and/or 400 may be used to carry out the method 500. The method 500 may include mowing a crop material in the field by a mower-conditioner machine 120 (at block 502). At least one moisture sensor 148 may sense a moisture content of the crop material (at block 504). A location sensor 116 and/or 144 may sense a location of the mower-conditioner machine (at block 506). The vehicle controller 112, the controller 140, and/or the data center 150 may individually or collectively receive the moisture and location data and subsequently generate the moisture content map 154 based at least partially on the moisture content of the crop material and the location of the mower-conditioner machine (at block 508). Furthermore, the vehicle controller 112, the controller 140, and/or the data center 150 may individually or collectively estimate a drying time of the crop material based at least partially on the moisture content map (at block 507). Thereafter, the vehicle controller 112, the controller 140, and/or the data center 150 may output the moisture content map 154 and/or the estimated drying time 156 to the operator (at block 509).

It is to be understood that one or more of the steps of the method 500 may be individually or collectively performed by the vehicle controller 112, 312, 412, the controller 140, 340, 440, and/or the data center 150, 350, 450 of the agricultural assembly 100, 300, 400 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller(s) described herein, such as the method 500, is implemented in software code or instructions which are tangibly stored on a tangible computer readable medium. The controller(s) loads the software code or instructions via a direct interface with the computer readable medium or via a wired and/or wireless network. Upon loading and executing such software code or instructions by the controller(s), the controller(s) may perform any of the functionality of the controller(s) described herein, including any steps of the method 500 described herein.

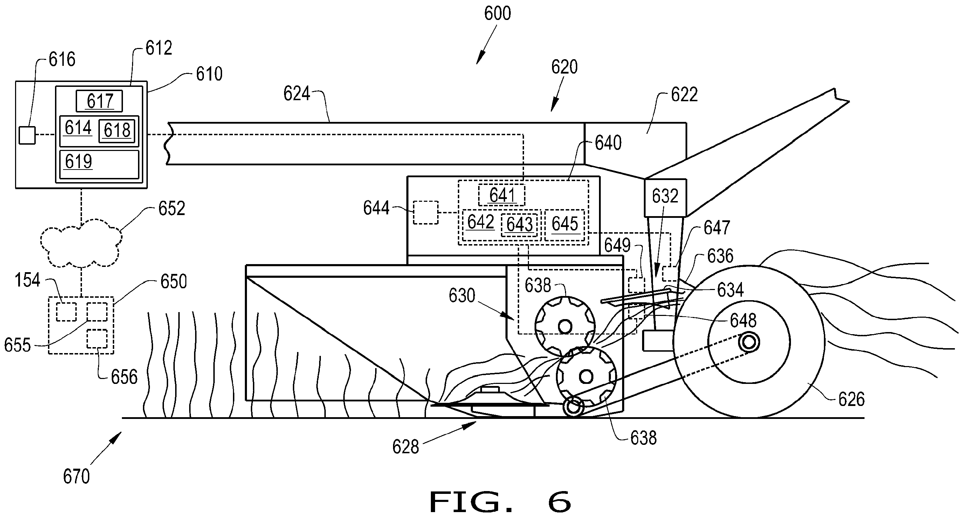

What follows in FIGS. 6-10 is a focus on providing a way to detect and use crop yield in conjunction with a mower-conditioner machine. It will be appreciated that any of the elements described and shown above with respect to FIGS. 1-5 can be included, even if not shown, in any of the FIGS. 6-10. For instance, the mower-conditioner machine(s) in FIGS. 6-10 can also include moisture sensing capabilities, which can be used as described and shown above with respect to FIGS. 1-5, and furthermore can be used in conjunction with the yield data of FIGS. 6-10 to provide more specific yield information. Further, in the embodiments of the present invention that follows, the reference numbers of elements that are substantially similar to what is described and shown with respect to FIGS. 1-5 are raised by a factor of 100, and thus can omit a detailed description thereof.]

Referring now to FIG. 6, there is shown another embodiment of the present invention, namely, an agricultural assembly 600 for controllably harvesting a forage crop material, such as a hay crop material. Agricultural assembly 600 which includes a work vehicle 610 (which can be referred to as an agricultural work vehicle, an agricultural vehicle, a work vehicle, or a vehicle) and a mower-conditioner machine 620 coupled with work vehicle 610. Agricultural assembly 600 is substantially similar to agricultural assembly 100, with reference numbers of substantially similar elements being raised by a factor of 100. Work vehicle 610 is schematically shown and can be, for example, a tractor configured to pull mower-conditioner machine 620, which is a pull-type mower-conditioner.

Work vehicle 610 may include a chassis, wheels and/or tracks, a prime mover, a steering assembly, and a cab for housing an operator. Work vehicle 610 may also include a controller 612, with a memory 614, and one or more sensor(s) 616 for sensing various operating parameters of the work vehicle 610. Controller 612 can further include a processor(s) 617, data 618 stored in memory 614, and instructions 619. Work vehicle 610 may include a positioning or location sensor 616 for sensing and providing location data, which may be formed as a GPS sensor or the like which tracks the position of work vehicle 610 in the field. Work vehicle 610 may also include a speed sensor, inclinometer, etc. That is, work vehicle 610 can include a known way to detect, determine, store, and use a ground speed of work vehicle 610; for instance, the ground speed of work vehicle 610 can be determined by and stored in controller 612 based upon data provided by ground speed sensor(s)(not shown). Work vehicle may also include user controls for controlling a speed of a power take-off shaft (PTO) speed for providing drive power to mower-conditioner 620, this PTO speed being associated with the revolutions per minute (RPM) of an engine of work vehicle 610, which can have specific settings (for example, 540 RPM, 1,000 RPM) and/or can be associated with a throttle position controlled by the user of work vehicle 610.

Mower-conditioner machine 620 may be connected to and towed by the work vehicle 610. Mower-conditioner machine 620 may generally include a frame 622 with a tongue 624 connected to the vehicle 610, wheels 626, a transversely disposed cutter bar 628, a crop conditioner 630, and a discharge assembly 632. Conditioner 630 includes conditioning rolls 638 (rather than conditioning rolls 638, conditioner 630 can include a single roll formed as a roll with flails, as is known). One or both conditioning rolls 638 can be driven by the PTO shaft so as to impart a motive force to the crop material rearward. The roll speed of one or both conditioning rolls 638 (which is associated with the speed of the PTO shaft, which itself is associated with the speed of an output shaft (such as a crankshaft) of the engine of the work vehicle 610) can be determined by way of known structures; this roll speed can be determined and stored in controller 612 and/or controller 640 (below). The discharge assembly 632 includes a crop-engaging device 634, which can be formed as a swath gate 634 pivotally connected to frame 622 and a pair of side shields 636 (which can be referred to as windrow shields) pivotally connected to frame 622. Swath gate 634 is configured for engaging with the crop material when the crop material exits the conditioning rolls 638 and is still airborne. That is, the crop material exits conditioning rolls 638 at a certain velocity imparted to the crop material by the conditioning rolls 638, flies through the air, and strikes an underside surface (which can also be referred to as a crop-engaging surface) of swath gate 634, and possibly strikes a windrow shield 636, before being deposited onto the ground.

Mower-conditioner machine 620 may also include a controller 640, with a memory 642, and one or more sensor(s) 644, 648, 649, and 647 for sensing various operating parameters of the mower-conditioner machine 620 and/or characteristics of the crop material. For instance, the mower-conditioner machine 620 may include one or more location sensors 644, moisture sensors 648, yield sensors 649, and position sensors 647. Sensors 644 and 648 are substantially similar to corresponding sensors discussed above (and thus will not be described again in detail here), and sensors 649 and 647 are discussed further below. It should be appreciated that the mower-conditioner machine 620 may not include a separate controller 640; therein, the various sensors sensor(s) 644, 648, 649, 647 may be operably coupled to the vehicle controller 612 which may control the functionality of mower-conditioner machine 620. Controller 640 can further include a processor(s) 641, data 643 stored in memory 642, and instructions 645.

Agricultural assembly 600 includes not only agricultural work vehicle 610 and mower-conditioner machine 620 but also a control system 670 operatively coupled with agricultural vehicle 610 and mower-conditioner machine 620. Control system 670 includes controller 612, controller 640, sensors 616, 647, 648, 649 (sensors 146, 446, and their functionality in conjunction with any corresponding controller 640, controller 612, and/or a controller of data center 650 and with other sensors, can be included in the embodiments of FIGS. 6-10 as well but are not shown or discussed in conjunction with these figures), data center 650, and network 652, and controller 640 and/or controller 612 can be operatively coupled with sensors 616, 647, 648, 649, data center 650, and network 652. Though the following discusses controller 640, it can be appreciated that controller 612 can substitute for or be in addition to controller 640.

Yield sensor 649 can be any suitable sensor configured for detecting the yield (that is, the quantity) of crop material exiting conditioner 630. Thus, yield sensor 649 is configured for detecting an operative parameter associated with crop-engaging device 634 when the forage crop material engages crop-engaging device 634 and thereby for outputting (to controller 612 and/or controller 640) an operative parameter signal associated with the operative parameter. Yield sensor 649 can be, for example, a force sensor or a load cell device, and the operative parameter which yield sensor 649 senses, detects, or otherwise measures can be a force (stated otherwise, a load) that acts upon or is otherwise experienced by swath gate 634. Yield sensor 649 and its interaction with swath gate 634 is discussed more below.

Position sensor 647 (which can also be referred to as a crop-engaging device position sensor) can be any suitable sensor configured for detecting the position, such as an angular position, of or associated with swath gate 634. For example, position sensor 647 can be an angular position sensor attached to or otherwise coupled with frame 622 or any other suitable structure so as to be able to detect an angular position of swath gate 634 or a tube 771 to which swath gate 634 is attached, the tube being attached to or coupled with frame 622 and forming a pivot about which swath gate 634 can pivot relative to frame 622. Thus, position sensor 647 is configured for detecting a position of crop-engaging device 634 and thereby for outputting a position signal associated with the position of the crop-engaging device 634.

Thus, controller 640 is configured for: (a) receiving a signal from moisture sensor 648; (b) receiving the operative parameter signal (that is a signal associated with force) from yield sensor 649; and (c) determining a forage crop material yield based at least in part on the operative parameter signal (from yield sensor 649). Regarding (a), this is discussed above. Regarding (b), the operative parameter signal is outputted by yield sensor 649 and thus corresponds to the force sensed by yield sensor 649. Regarding (c), based upon look-up tables and/or an algorithm, controller 640 can calculate or otherwise determine the forage crop material yield at any given point on the field that is harvested. This forage crop material yield can be outputted to controller 612 and/or data center 650 (below) and can be displayed on a display screen for a user to view or otherwise use. To determine the forage crop material yield, controller 640 can also factor in moisture data from moisture sensor 648. For instance, when considering forage crop material yield, farmers (or other end users) are often concerned with the dry matter of the forage crop material. When the forage crop material is cut and conditioned by mower-conditioner 620, the forage crop material may have a substantial moisture content and thus a relatively smaller dry matter content. To determine the dry matter content of the forage crop material cut and conditioned by mower-conditioner 620, controller 640 can subtract the moisture content from moisture sensor 648 from the forage crop material yield from yield sensor 649. Further, controller 640 is configured for generating a yield map 655 based at least in part on the forage crop material yield. Such a map 655 can show the yield data (whether yield data prior to subtracting the moisture content, or the dry matter content) at each point, area, zone, section, or field of interest to the user. When a value other than a point is of interest, average yield for the particular area, zone, section, or field can be calculated by controller 640, for example.

Further, controller 640 can be operably connected to the vehicle controller 612 via an ISOBUS communication interface. As indicated, controller 640 can be configured to receive location data from one or more location sensors 616 and/or 644, receive moisture content data from one or more moisture sensors 648, and receive yield data from one or more yield sensors 649. Controller 640 can also be configured to generate a moisture content map 154 based at least partially on the sensed moisture content data and the location data, and can be configured to generate yield map 655 based at least partially on the sensed yield data, the location data, as well as the moisture content data from moisture sensor 648. Controller 640 can also be configured to estimate a drying time 656 of the crop material based at least partially on the moisture content map 154 and/or the yield map 655. However, if mower-conditioner machine 620 is not equipped with controller 640, vehicle controller 612 may perform the aforementioned functionality. Agricultural assembly 600 may also include data center 650 and network 652 which may be similar to the data center 150 and network 152, as discussed above (and thus will not be discussed in as much detail as above). Briefly, vehicle controller 612 and/or the controller 640 can also be operatively coupled to data center 650 by way of network 652 of the assembly 600. For instance, controller 640 can be operably connected to the network 652 by way of the vehicle controller 612, or controller 640 may be directly connected to network 652, separately from vehicle controller 612. Data center 650 may also be configured to receive, process, and record data concerning the system 600. Data center 650 can include one or more controllers controlling its operations (such as those operations referenced herein, such as with respect to 154, 655, 656), each controller including a processor, memory, data, and instructions (not shown).

It should be appreciated that controller 640, vehicle controller 612, and/or data center 650 may solely or collectively generate the moisture content map 154, yield map 655, and/or conduct drying time 656 processing by processing the signals, e.g. location data, moisture content data, yield data, etc., from the sensors 616, 644, 647, 648, 649 and estimating a drying time for one or more points, areas, sections, zones of the field, or fields. Generation of the moisture content map 154 is described above. Yield map 655 may be generated, as indicated, for the entire field or portions thereof such that the map 655 may be created and updated in real-time as mower-conditioner machine 620 is operating in the field.

In more detail, controller 640, vehicle controller 612, and/or data center 650 may determine the forage crop material yield of the forage crop material via a lookup table upon receiving the yield data from sensor(s) 649 (and, optionally, sensors 648, as indicated), overlay the determined yield determinations with location data, and subsequently create yield map 655. Yield map 655 and/or any other desired information, such as moisture data, the crop type, and/or weather conditions, may be used to estimate a drying time 656 of the crop material. The estimated drying time 656 may be sectionalized by specific passes and/or zones of similarly grouped crop material, such as dry or moist groupings of crop material. Furthermore, controller(s) 640, 612, and/or data center 650 may generate an optimized procedure based on the estimated drying time. For instance, one or more specific areas of the field may require more or less dry-down time, which can then be used to more precisely plan an optimum subsequent forage processing operation strategy, such as tedding, raking, merging, baling, or chopping, in a particular field to provide optimum dry-down time for each area, zone, or section of a field. For example, if the crop material mowed in the northwest quadrant of a field has much lower yield in terms of dry matter content at the time of mowing than the other three quadrants, then the operator can perform the next forage processing operation the northwest quadrant last, thus allowing it more dry-down time relative to the other sections of the field rather than entering the field and beginning operation wherever it is most convenient to start operation. As can be appreciated, the data center 650 may or may not store the yield map 655 (655 can collectively refer to yield data and map), moisture content map 154 (154 can collectively refer to moisture content data and map), and/or the estimated drying time 656.

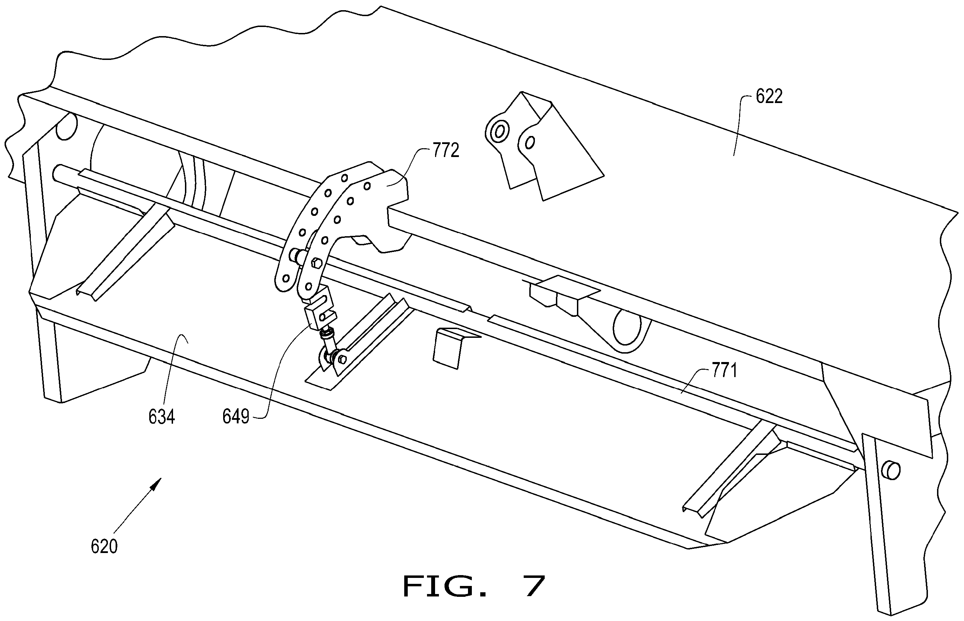

Referring now to FIG. 7, there is shown mower-conditioner machine 620, with portions broken away, from the rear. More specifically, shown are frame 622, a pivot tube 771 pivotably mounted to frame 622, swath gate 634, mounting bracket 772 including a plurality of mounting holes, and sensor 649. Sensor 649 is formed here as a load cell device 649 integrated as a mounting strut spanning the distance between a topside surface of swath gate 634 and mounting bracket 772. The connection between sensor 649 and swath gate 634 is pivotable, as is the connection between sensor 649 and mounting bracket 772. The latter connection can be manually adjusted by selectively repositioning the connection in a respective pair of mounting holes in mounting bracket 772, depending upon the trajectory that the user wishes the crop material to take when exiting, for example, conditioning rolls 638. Though only one sensor 649 is shown in FIG. 7, it can be appreciated that a plurality of sensors 649 can be employed at various positions along the topside surface of swath gate 634.

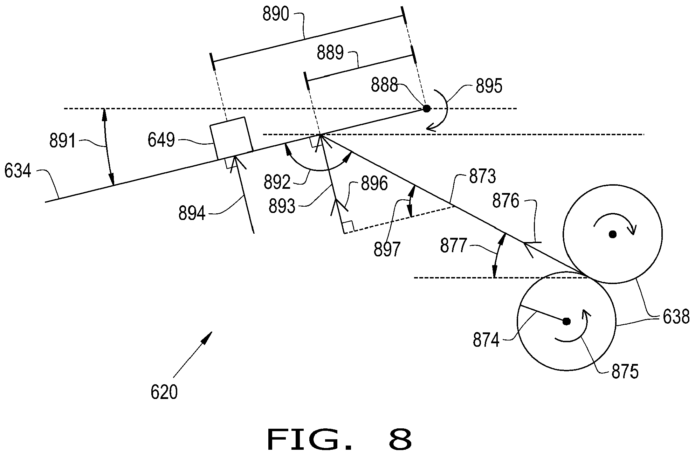

Referring now to FIG. 8, there is shown a side view of swath gate 634, conditioning rolls 638 (alternatively, a single roll with flails could be provided instead), yield sensor 649 (each of which is shown schematically), and a stream 873 of crop material (such as hay crop material, which can also be referred to as a crop mat at this stage) exiting from between conditioning rolls 638 and striking against the underside surface of swath gate 634 (not shown is the crop material falling away after striking swath gate 634). In conjunction with FIG. 8, what is described is how to calculate the mass of the crop material striking swath gate 634, and thus the crop yield. Further, what is shown in FIG. 8 can be considered a single frame of reference moving horizontally to the right of the page and at the same speed. Conditioning rolls 638 rotate in opposite directions and with substantially similar angular velocity, the lower conditioning roll shown to have a radius 874 and to rotate counter-clockwise with an angular velocity 875. The stream 873 of crop material exits from between conditioning rolls 638 at a velocity 876 of the crop (signified by the arrow 876 on stream 873) and at an angle 877 with the horizontal (which can be deemed to be the ground) or a horizontal surface of mower-conditioner 620. Velocity 876 and angle 877 can be deemed constant, with velocity being calculated from angular velocity 875 and radius 874 (linear velocity = radius * angular velocity). Swath gate 634 rotates about a pivot axis 888 in order to set the angular setting of swath gate 634 by way of pivot tube 771 and mounting bracket 772. With the angular setting of swath gate 634 in FIG. 8, swath gate 634 is at an angle 891 from the horizontal (which can be sensed by sensor 647), and stream 873 of crop material strikes swath gate 634 at a radial distance 889 from pivot axis 888; (radial distance 889 can be calculated from angles 877 and 891). Yield sensor 649 is positioned a radial distance 890 from pivot axis 888. Assumed is that stream 873 strikes swath gate 634 at velocity 876 and at angle 877 to the horizontal and that swath gate 634 is essentially a rigid surface that does not deflect and can be used to measure load imparted by the crop material. Further, angle 892 can be calculated using angles 877 and 891.

In general, the equation "force = mass * acceleration" can be used to determine the mass of forage crop material and thus the yield. More specifically, this can be adapted so as to use the impact force of the crop material on swath gate 634 over a period of time to calculate the mass of the crop material, as follows: fₐᵥₑ = (m*v)/t, wherein m = (fₐᵥₑ*t)/v, wherein fₐᵥₑ is the average crop force, m = mass of crop material, v = velocity of crop material, and t = elapsed time. According to one way of working with this latter equation, fₐᵥₑ can more specifically correspond to a perpendicular force 893 (fₐᵥₑ₋ₚ₋ₛₜ) of stream 873, and v can more specifically correspond to a vertical velocity component vᵥₑᵣₜ 896 of velocity 876. which can be calculated using the perpendicular force 894 measured by sensor 649 and a force balancing about pivot axis 888 (in particular, pivot tube 771). That is, the moment 895 (torque) about axis 888 caused by stream 873 striking swath gate 634 is equal to both the moment about axis 888 caused by force 893 and the moment about axis 888 caused by force 894 (moment = force * distance), wherein force 893 = (force 894 * distance 890)/(distance 889). Further, vᵥₑᵣₜ 896 = velocity 876 * sine (angle 897), wherein angle 897 can be calculated given angles 877, 891, 892.

Further, a correction factor can be employed as well, to render the mass calculation even more precise. In this vein, then the equation for mass can become: m = c*(fₐᵥₑ*t)/v, wherein c is a crop constant based on the physical characteristics of the mowed crop material. This, optionally, can include (though not necessarily so) the moisture content of the crop material that is measured by moisture sensor 648 (that is, the dry matter content of the yield can be calculated knowing the moisture content). Further, the mass of the crop material over a period of time (for example, at a frequency of 1 Hz) along with GPS location (i.e., from sensors 616 and/or 644) to provide the yield map 655. Further, a correction factor for machine set up (i.e., mower-conditioner machine 620) can be used as well, which can reflect roll pressure and/or roll gap (with reference to conditioning rolls 638); for, the crop material may contact the swath gate 634 differently for different roll pressures, for example.

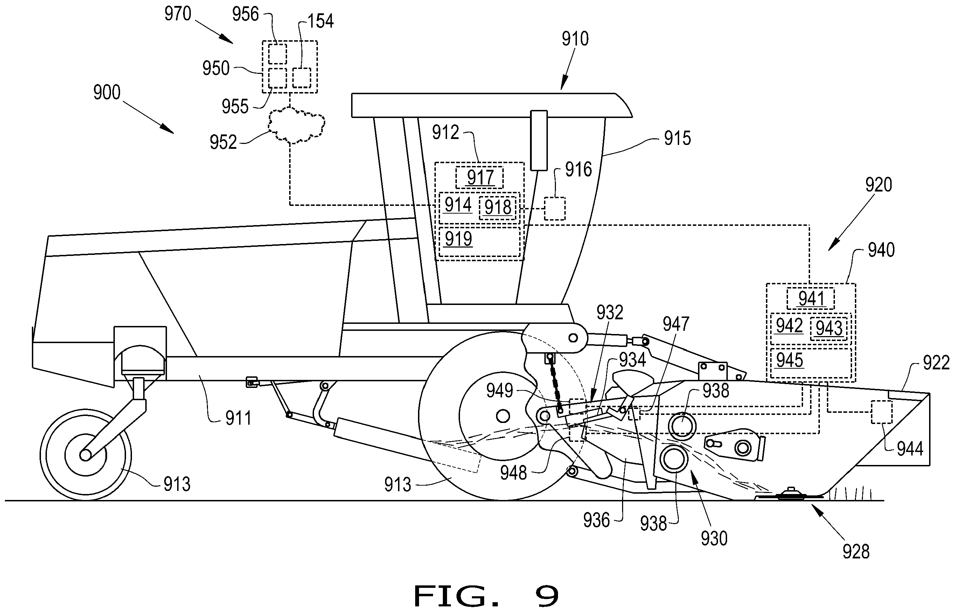

Referring now to FIG. 9, there is shown an alternative embodiment of the agricultural assembly according to the present invention, namely, an agricultural assembly 900 for controllably harvesting the crop material, such as hay crop material. Agricultural assembly 900 which includes a work vehicle 910 (which can be referred to as an agricultural work vehicle, an agricultural vehicle, a work vehicle, or a vehicle) and a mower-conditioner machine 920 coupled with work vehicle 910. Agricultural assembly 900 is substantially similar to agricultural assembly 600, with reference numbers of substantially similar elements being raised by a factor of 100. Agricultural assembly 900 is also substantially similar to agricultural assembly 400 in that work vehicle 910 is a self-propelled windrower, and mower-conditioner machine 920 is an attachment head 920 that is removably connected to windrower 910.

Similarly to the work vehicle 610, work vehicle 910 may include a chassis 911, wheels and/or tracks 913, a prime mover, a steering assembly, a cab 915, a controller 912, with a memory 914, and one or more sensor(s) 916, such as a location sensor 916, for sensing various operating parameters of the work vehicle 910, such as the location of work vehicle 910. The vehicle controller 912 may operate substantially similar to the vehicle controller 612, as discussed above.

Mower-conditioner machine 920 may be removably connected to and pushed by the work vehicle 910. Mower-conditioner 920 may include a frame 922 that is removably connected to the chassis 911 of work vehicle 910, a transversely disposed cutter bar 928, a crop conditioner 930 with conditioning rolls 938, and a discharge assembly 932. Discharge assembly 932 includes a swath gate 934 which may be pivotally connected to frame 922 and a pair of side shields 936 which may be pivotally connected to frame 922.

Mower-conditioner machine 920 may also include a controller 940, with a memory 942, and one or more sensor(s) 944, 948, 949, 947 for sensing various operating parameters of the mower-conditioner machine 920 and/or characteristics of the crop material. Controller 940 can be operably connected to vehicle controller 912. Mower-conditioner machine 920 may include one or more crop location sensors 944, moisture sensors 948, yield sensors 949, and/or position sensors 947. Controller 940 and sensors 944, 948, 949, 947 may be substantially similar to controller 640 and sensors 644, 648, 649, 647, as discussed above. It should be appreciated that mower-conditioner machine 920 may not include a controller 940 or location sensor 944; thus, the various sensors sensor(s) 948, 949, 947 may be operably coupled to vehicle controller 912 which may control the functionality of mower-conditioner machine 920. The agricultural assembly 900 may also include a data center 950 and a network 952 which may be substantially similar to data center 650 and network 652, as discussed above, and thus may receive, process, and/or store moisture content data and map 154, yield data and map 955, and estimated drying time 956. Further, agricultural assembly 900 further includes control system 970, which includes controller 912, controller 940, sensors 916, 947, 948, 949, data center 950, and network 952, and controller 940 and/or controller 912 can be operatively coupled with sensors 916, 946, 947, 948, 949, data center 950, and network 952 (sensors 146, 446, and their functionality in conjunction with any corresponding controller 940, controller 912, and/or a controller of data center 950 and with other sensors, can be included in the embodiments of FIGS. 6-10 as well but are not shown or discussed in conjunction with these figures). Further, controller 912 can include processor 917, memory 914, data 918, and instructions 919; controller 940 can include processor 941, memory 942, data 943, and instructions 945; and data center 950 can include one or more controllers controlling its operations (such as those operations referenced herein, such as with respect to 154, 955, 956), each controller including a processor, memory, data, and instructions (not shown).

Further, in general, controllers 612, 640, 912, 940, and any controllers associated with data center 650, 950 (referenced as DC-C2, for the respective data center controller, which can control any of the operations mentioned herein with respect to data center 650, 950) may each correspond to any suitable processor-based device(s), such as a computing device or any combination of computing devices. Each controller 612, 640, 912, 940, DC-C2 may generally include one or more processor(s) 617, 641, 917, 941 and associated memory 614, 642, 914, 942 configured to perform a variety of computer-implemented functions (e.g., performing the methods, steps, algorithms, calculations and the like disclosed herein). Thus, each controller 612, 640, 912, 940, DC-C2 may include a respective processor 617, 641, 917, 941 therein, as well as associated memory 614, 642, 914, 942, data 618, 643, 918, 943, and instructions 619, 645, 919, 945, each forming at least part of the respective controller 612, 640, 912, 940, DC-C2. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the respective memory 614, 642, 914, 942 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD), and/or other suitable memory elements. Such memory 614, 642, 914, 942 may generally be configured to store information accessible to the processor(s) 617, 641, 917, 941, including data 618, 643, 918, 943 that can be retrieved, manipulated, created, and/or stored by the processor(s) 617, 641, 917, 941 and the instructions 619, 645, 919, 945 that can be executed by the processor(s) 617, 641, 917, 941. In some embodiments, data 618, 643, 918, 943 may be stored in one or more databases.

In use, agricultural assembly 600, 900 can be used to perform a mowing-conditioning operation with respect to a crop material, such as hay crop material. As agricultural assembly 600, 900 traverses the ground, mower-conditioner machine 620, 920 cuts the crop material. Upon being severed from the ground, the crop material flows from cutter bar 628, 928 to conditioning rolls 638, 938 (or to a single rotating roll if flails are used); the crop material passes between conditioning rolls 638 and proceeds airborne to strike the underside surface of swath gate 634, 934, which has been set at a certain desired angle from the horizontal, and then proceeds to fall to the ground. Location sensos 616, 916 and/or 644, 944 provide the location of vehicle 610, 910 and/or mower-conditioner machine 620, 920 to a respective controller 612, 912, 640, 940 (a lateral offset being considered by a respective controller 612, 640, as necessary, when a pull-type mower-conditioner 610 is employed). Moisture sensors 648, 948 can provide moisture content data to a respective controller 612, 912, 640, 940 so as to determine a moisture content of the crop material. Yield sensors 649, 949 provide yield data to a respective controller 612, 912, 640, 940 so as to determine a crop yield of the crop material; this crop yield can be, more specifically, a dry matter yield of the crop material, which is a function of the moisture content, as discussed above. Position sensors 647, 947 detect the position of swath gate 634, 934 and provide this information to controller 612, 912, 640, 940 in order to determine the crop material yield. A respective controller 612, 912, 640, 940 can generate a moisture content map 154, a yield map 655, 955, and estimate drying time 656, 956. All of this information can be received, processed, and/or stored in data center 650, 950, by way of network 652, 952. Further, a controller of data center 650, 950 can perform any of the controller functions described herein with respect to controllers 612, 912, 640, 940.

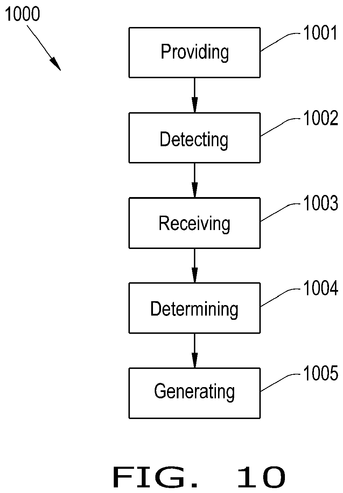

Referring now to FIG. 10, there is shown a flow diagram of a method 1000 of controllably harvesting a forage crop material. Method 1000 includes the steps of: providing 1001 an agricultural assembly 600, 900 including an agricultural work vehicle 610, 910, a mower-conditioner machine 620, 920, and a control system 670, 970, the mower-conditioner machine 620, 920 being coupled with the agricultural work vehicle 610, 910 and including a crop-engaging device 634, 934 configured for engaging with the forage crop material, the control system 670, 970 being operatively coupled with the agricultural work vehicle 610, 910 and the mower-conditioner machine 620, 920; detecting 1002, by a yield sensor 649, 949 of the control system 670, 970, an operative parameter associated with the crop-engaging device 634, 934 when the forage crop material engages the crop-engaging device 634, 934 and thereby outputting an operative parameter signal associated with the operative parameter; receiving 1003, by a controller 612, 640, 912, 940 of the control system and which is operatively coupled with the yield sensor 649, 949, the operative parameter signal; and determining 1004, by the controller 612, 640, 912, 940, a forage crop material yield based at least in part on the operative parameter signal. Further, the crop-engaging device 634, 934 can be a swath gate 634, 934 of the mower-conditioner machine 620, 920. Further, the yield sensor 649, 949 can be a load cell device 649, 949, and the operative parameter can be a load (force) experienced by the crop-engaging device 634, 934. Further, the control system 670, 970 can further include a crop-engaging device position sensor 647, 947, the method 1000 further including the steps of: detecting, by the crop-engaging device position sensor 647, 947, a position of the crop-engaging device 634, 934 and thereby outputting a position signal associated with the position of the crop-engaging device 634, 934; and receiving, by the controller 612, 640, 912, 940 which is operatively coupled with the crop-engaging device position sensor 649, 949, the position signal; and determining, by the controller 612, 640, 912, 940, the forage crop material yield based at least in part on the position signal. Further, the method 1000 can further include the step of generating 1005, by the controller 612, 640, 912, 940, a yield map based at least in part on the forage crop material yield.

It is to be understood that the steps of method 1000 are performed by controller 612, 640, 912, 940, DC-C2 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by controller 612, 640, 912, 940, DC-C2 described herein, such as the method 1000, is implemented in software code or instructions which are tangibly stored on a tangible computer readable medium. The controller 612, 640, 912, 940, DC-C2 loads the software code or instructions via a direct interface with the computer readable medium or via a wired and/or wireless network. Upon loading and executing such software code or instructions by controller 612, 640, 912, 940, DC-C2, controller 612, 640, 912, 940, DC-C2 may perform any of the functionality of controller 612, 640, 912, 940, DC-C2 described herein, including any steps of the method 1000.

## Claims

1. A control system (670, 970) of an agricultural assembly (600, 900) for controllably harvesting a forage crop material, the agricultural assembly (600, 900) including an agricultural work vehicle (610, 910) and a mower-conditioner machine (620, 920) coupled with the agricultural work vehicle (610, 910), the control system (670, 970) comprising:
a control system (670, 970) operatively coupled with the agricultural work vehicle (610, 910) and the mower-conditioner machine (620, 920), the control system (670, 970) including:
a yield sensor (649, 949) configured for detecting an operative parameter associated with a crop-engaging device (634, 934) of the mower-conditioner machine (620, 920) when the forage crop material engages the crop-engaging device (634, 934) and thereby for outputting an operative parameter signal associated with the operative parameter;
a controller (612, 640, 912, 940) operatively coupled with the yield sensor (649, 949) and configured for receiving the operative parameter signal and for determining a forage crop material yield based at least in part on the operative parameter signal.

2. The control system (670, 970) of claim 1, wherein the yield sensor (649, 949) is configured for detecting the operative parameter associated with the crop-engaging device (634, 934) formed as a swath gate (634, 934) of the mower-conditioner machine (620, 920).

3. The control system (670, 970) of claim 2, wherein the yield sensor (649, 949) is a load cell device (649, 949), and the operative parameter is a load experienced by the crop-engaging device (634, 934).

4. The control system (670, 970) of claim 3, wherein the control system (670, 970) further includes a crop-engaging device position sensor (647, 947) configured for detecting a position of the crop-engaging device (634, 934) and thereby for outputting a position signal associated with the position of the crop-engaging device (634, 934), the controller (612, 640, 912, 940) being operatively coupled with the crop-engaging device position (647, 947) and configured for receiving the position signal and for determining the forage crop material yield based at least in part on the position signal.

5. The control system (670, 970) of claim 4, wherein the controller (612, 640, 912, 940) is configured for generating a yield map (655, 955) based at least in part on the forage crop material yield.

6. An agricultural assembly (600, 900) for controllably harvesting a forage crop material, the agricultural assembly (600, 900) comprising:
an agricultural work vehicle (610, 910);
a mower-conditioner machine (620, 920) coupled with the agricultural work vehicle (610, 910), the mower-conditioner machine (620, 920) including a crop-engaging device (634, 934) configured for engaging with the forage crop material;
a control system (670, 970) as claimed in any preceding claim.

7. A method (1000) of controllably harvesting a forage crop material, the method (1000) comprising the steps of:
providing (1001) an agricultural assembly (600, 900) including an agricultural work vehicle (610, 910), a mower-conditioner machine (620, 920), and a control system (670, 970), the mower-conditioner machine (620, 920) being coupled with the agricultural work vehicle (610, 910) and including a crop-engaging device (634, 934) configured for engaging with the forage crop material, the control system (670, 970) being operatively coupled with the agricultural work vehicle (610, 910) and the mower-conditioner machine (620, 920),
detecting (1002), by a yield sensor (649, 949) of the control system (670, 970), an operative parameter associated with the crop-engaging device (634, 934) when the forage crop material engages the crop-engaging device (634, 934) and thereby outputting an operative parameter signal associated with the operative parameter;
receiving (1003), by a controller (612, 640, 912, 940) of the control system (670, 970) and which is operatively coupled with the yield sensor (649, 949), the operative parameter signal; and
determining (1004), by the controller (612, 640, 912, 940), a forage crop material yield based at least in part on the operative parameter signal.

8. The method (1000) of claim 7, wherein the crop-engaging device (634, 934) is a swath gate (634, 934) of the mower-conditioner machine (620, 920).

9. The method (1000) of claim 8, wherein the yield sensor (649, 949) is a load cell device (649, 949), and the operative parameter is a load experienced by the crop-engaging device (634, 934).

10. The method (1000) of claim 9, wherein the control system (670, 970) further includes a crop-engaging device position sensor (647, 947), the method (1000) further including the steps of:
detecting, by the crop-engaging device position sensor (647, 947), a position of the crop-engaging device (634, 934) and thereby outputting a position signal associated with the position of the crop-engaging device (634, 934); and
receiving, by the controller (612, 640, 912, 940) which is operatively coupled with the crop-engaging device position sensor (649, 949), the position signal; and
determining, by the controller (612, 640, 912, 940), the forage crop material yield based at least in part on the position signal.

11. The method (1000) of claim 10, further including the step of generating (1005), by the controller (612, 640, 912, 940), a yield map (655, 955) based at least in part on the forage crop material yield.
